# NEUE EUROPÄISCHE PATENTSCHRIFT

(11) **EP 1 642 673 B2**
(45) Veröffentlichungstag und Bekanntmachung des Hinweises auf die Entscheidung über den Einspruch: **01.12.2010**
(45) Hinweis auf die Patenterteilung: 27.06.2007
(21) Anmeldenummer: 05016052.2
(22) Anmeldetag: 23.07.2005
(51) Int. Cl.: B23Q 7/04, B23Q 39/00, B23Q 39/02, B23Q 1/48

(54) **Werkzeugmaschine**
Machine tool
Machine outil

(30) Priorität: 29.09.2004 DE 202004015097 U
(43) Veröffentlichungstag der Anmeldung: 05.04.2006
(73) Patentinhaber: ELHA-Maschinenbau Liemke KG, 33161 Hövelhof (DE)
(72) Erfinder: Klösener, Manfred, 33129 Delbrück (DE)
(74) Vertreter: Specht, Peter

(56) Entgegenhaltungen:
- WO-A-97/10932
- DE-A1- 2 544 098
- DE-A1- 10 005 338
- US-B1- 6 257 108

## Beschreibung

Die vorliegende Erfindung betrifft eine Werkzeugmaschine gemäß dem Oberbegriff des Anspruchs 1. (WO-A-97/10932)

Eine solche, spanende Werkzeugmaschine, bei der dem Grundsatz nach das zu bearbeitende Werkstück zu den jeweiligen Bearbeitungswerkzeugen verfahren wird, zeichnet sich vor allem durch einen hohen wirtschaftlichen Betrieb aus, der sich insbesondere daraus ergibt, dass keine Werkzeugwechselzeiten und keine Spindel-Hochlaufzeiten entstehen und dadurch die Nebenzeiten minimiert werden.

Auch ist eine mehrspindelige Parallelbearbeitung mit den sich daraus ergebenden bemerkenswerten wirtschaftlichen Vorteilen möglich.

Konzeptionell kann das die Werkstückaufnahme tragende Trägerelement so gesteuert werden, dass eine automatische Bestückung mit dem zu bearbeitenden Werkstück möglich ist, das dann in der Werkstückaufnahme zur Bearbeitung entsprechend gespannt wird.

Dabei ist das Trägerelement mehrachsig translatorisch verfahrbar, das heißt, in x-, y- und z-Richtung, wobei die z-Richtung der Längsachsrichtung des als Kragarm ausgebildeten Trägerelements entspricht.

Weiter ist die Werkstückaufnahme auf einem stirnseitig angeordneten Rundtisch des Trägerelements angeordnet, durch den das oder die eingespannten Werkstücke um eine Rotationsachse drehbar bewegt werden können.

Die bekannte Bauart, die sich, wie erwähnt, in wirtschaftlicher Hinsicht bewährt hat, bringt jedoch einige Nachteile bezüglich der Herstellung, Wartung und Instandhaltung mit sich, ebenso wie bezüglich der Bearbeitungsgenauigkeit.

Um das Trägerelement bzw. den Rundtisch in den genannten Achsen bewegen zu können, sind entsprechende Wälz- und/oder Gleitlager erforderlich, die einen erheblichen Fertigungsaufwand bedingen und in der Summe ihrer Fertigungstoleranzen zu Ungenauigkeiten führen, die sich negativ auf das Bearbeitungsergebnis auswirken. Hierzu zählt auch, dass jede der Lagerung oder Führung in gewissem Umfang bei Belastung nachgibt.

Die Vielzahl der erforderlichen Komponenten erfordern einen erheblichen Wartungs- und Instandhaltungsaufwand, der neben den hieraus sich ergebenden Maschinenstillstandzeiten einem optimierten Betrieb der Werkzeugmaschine entgegensteht.

Der vorliegenden Erfindung liegt die Aufgabe zugrunde, eine Werkzeugmaschine der gattungsgemäßen Art so weiter zu entwickeln, dass sie einfacher und damit kostengünstiger herstellbar ist, in ihrer Funktionsfähigkeit wie Bearbeitungsgenauigkeit und Steifigkeit verbessert wird und wirtschaftlicher einsetzbar ist.

Diese Aufgabe wird durch eine Werkzeugmaschine gelöst, die die Merkmale des Anspruchs 1 aufweist.

Durch diese konstruktive Ausgestaltung besteht die Möglichkeit, die Trägerwelle in einer einzigen Lagerung sowohl für die axiale wie auch für die rotatorische Bewegung zu halten, wozu nach einer vorteilhaften Weiterbildung der Erfindung mehrere Gleitlager vorgesehen sind, die die als Hohlwelle ausgebildete Trägerwelle jeweils ringförmig umgreifen. Bevorzugt finden hydrostatische Gleitlager Verwendung, da diese gleich beim Beginn des Trägerelementes einen Gleitfilm zwischen dem Lager und der Trägerwelle aufweist.

Die Gleitlager haben den Vorteil, dass sie einfach im Aufbau sind, kein Lagerspiel ermöglichen und bei Vollschmierung sehr geringe Reibungswerte aufweisen. Infolge der Schmiermittelschicht sind sie schwingungs- und geräuschdämpfend. Sie sind für größte Belastungen auslegbar, so dass durch die Erfindung der Einsatzbereich der Werkzeugmaschine dahingehend verbessert wird, dass auch Werkstücke mit größerem Gewicht ohne weiteres bearbeitet werden können.

Aufgrund der verbesserten Führungsgenauigkeit wird auch eine Optimierung des Bearbeitungsergebnisses erreicht, das heißt daraus resultierende Fertigungsungenauigkeiten werden auf ein Minimum reduziert.

Daneben ist als weiterer Vorteil die geringe Störanfälligkeit und die damit verbundenen gesenkten Wartungs- und Instandhaltungskosten zu nennen, aus denen sich unter Berücksichtigung der verminderten Maschinenstillstandszeiten eine durchaus bemerkenswerte Wirtschaftlichkeitserhöhung ergibt.

Besonders bevorzugt ist die neue Werkzeugmaschine dann einsetzbar, wenn neben den bearbeitungsbedingten Verfahrbewegungen auch ein selbsttätiges Be- und Entladen der Werkstückaufnahmen erfolgen soll, da hierzu die Trägerwelle in einen über die Bearbeitungsebenen hinausgehenden Bereich ausgefahren werden muss, mit einer entsprechenden Auskragung. Die dabei auftretenden Biegekräfte können durch die Hohlwelle weitgehend verformungsfrei aufgenommen werden.

Die Ausbildung der Trägerwelle als Hohlwelle ermöglicht eine Durchführung von Leitungen zum Betrieb der Werkstückaufnahme zur Zuführung von Medien, wie Druckluft, Öl oder dergleichen oder zur Zuführung von Strom.

Ebenfalls zentral durch die Trägerwelle können Zuführungen für den Betrieb von zusätzlich angebrachten Drehtischen oder dergleichen geführt werden, wobei als Trägerwelle eine handelsübliche, nur gering zu modifizierende Pinole Verwendung finden kann, mit den dazu gehörigen, ebenfalls handelsüblich erhältlichen hydrostatischen Lagern, durch die die axiale und rotierende Bewegung der Trägerwelle möglich ist.

Für die axiale Verfahrbarkeit der Trägerwelle ist ein Linearantrieb vorgesehen, während die Rotationsbewegung vorzugsweise durch einen Direktantrieb, beispielsweise einen Torquemotor, erfolgt.

Dieser Direktantrieb ist in einem Gehäuse gelagert, das mit dem Linearantrieb verbunden ist und somit die durch den Linearantrieb ausgelöste Hin- und Herbewegung der Trägerwelle mit vollführt. Auf diese Weise ist gleichzeitig eine Rotation und translatorische Bewegung der Trägerwelle möglich.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Werkzeugmaschine in einer schematisch dargestellten Perspektiv-Ansicht

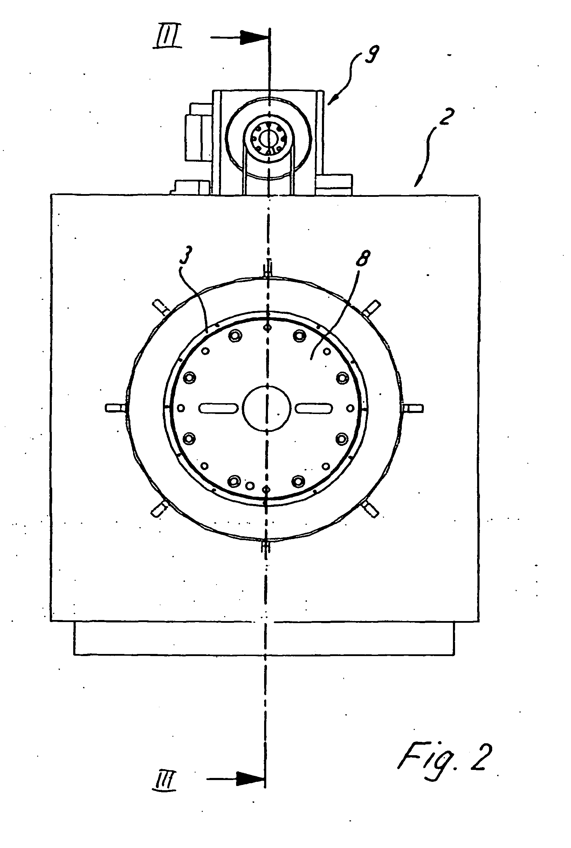

- Figur 2: einen Teil der Werkzeugmaschine in einer Vorderansicht
- Figur 3: einen Längsschicht durch den Teil der Werkzeugmaschine gemäß der Linie III ― III in Figur 2

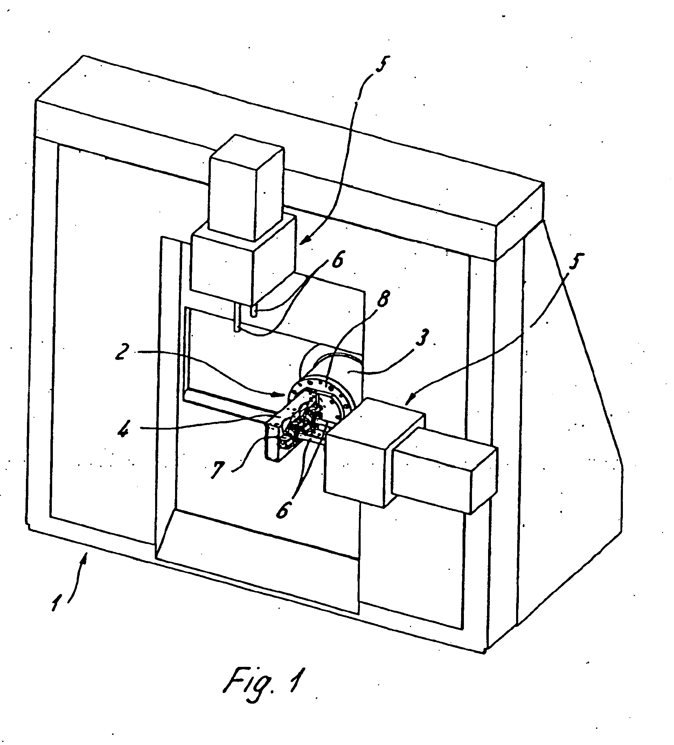

In der Figur 1 ist eine Werkzeugmaschine zur spanenden Bearbeitung von Werkstücken 7 dargestellt, die ein Gestell 1 aufweist, an dem mehrere Spindelaufnahmen 5 befestigt sind, von denen jede eine oder mehrere feststehende, unterschiedlich positionierte Werkzeugspindeln 6 trägt, mit denen ein Werkstück 7 bearbeitbar ist.

Da sowohl die Spindelaufnahmen 5 wie auch die Werkzeugspindeln 6 ortsfest gehalten sind, wird das Werkstück 7 entsprechend dem jeweiligen Bearbeitungsschritt zu den Spindeln 6 hin verfahren.

Hierzu ist ein Trägerelement 2 vorgesehen, das in x- und y-Richtung bewegbar ist.

In diesem Trägerelement 2 ist eine Trägerwelle 3 axial hin- und herbewegbar und um eine horizontale Drehachse drehbar angeordnet.

Stirnseitig, auf der den Werkzeugspindeln 6 zugewandten Seite, trägt die Trägerwelle 3 einen Flansch 8, an dem eine als Spannwerkzeug ausgebildete Werkstückaufnahme 4 befestigt ist. Dabei ist dieser Flansch 8 so ausgebildet, dass eine Vielzahl von Werkstückaufnahmen 4 als standardisierte Elemente in unterschiedlichen Positionen angeordnet und befestigt werden können.

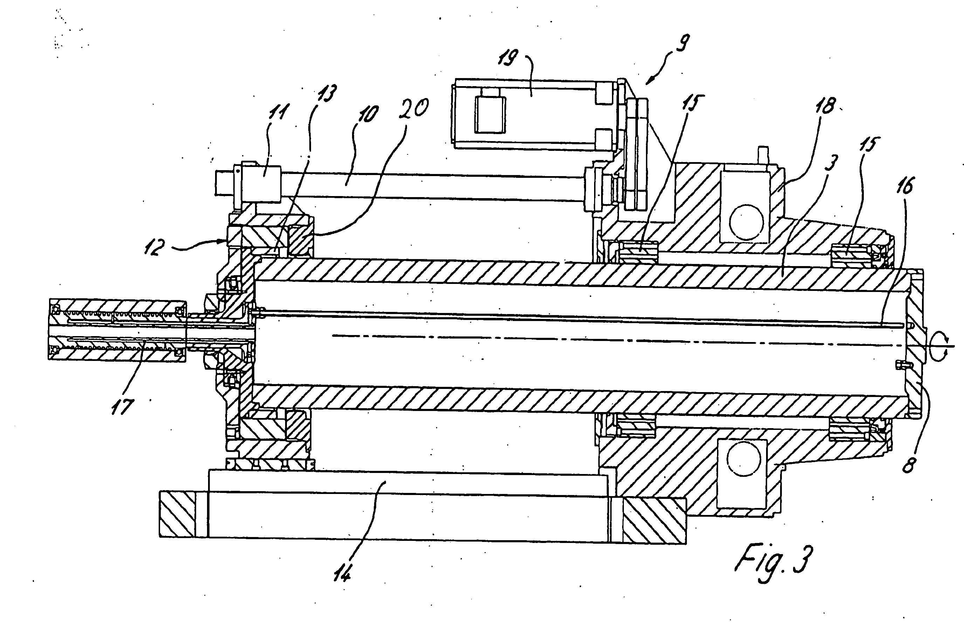

Wie insbesondere die Figur 3 sehr deutlich zeigt, ist die als Hohlwelle ausgebildete Trägerwelle 3 in zwei hydrostatischen Lagern 15 sowohl axial verschiebbar wie auch drehbar gelagert, wobei die hydrostatischen Lager 15 in einem Lagerkopf 18 angeordnet sind.

In dem dem Flansch 8 gegenüberliegenden Endbereich ist ein Direktantrieb in Form eines Torquemotors 13 angeordnet, mit dem die Trägerwelle 3 drehbar ist und der in einem Gehäuse 12 angeordnet ist.

Zur Verdrehsicherung des Torquemotors 13 ist das Gehäuse 12 in einer Längsführung 14 des Gestells 1 gehalten, während sich an die der Trägerwelle 3 abgewandte Seite des Gehäuses 12 ein Anschluss 17 anschließt, über den Zuführleitungen 16, beispielsweise zur pneumatischen oder hydraulischen Betätigung der Werkstückaufnahme 4 oder zum Betrieb von zusätzlichen Drehtischen geführt sind. Hierzu zählen auch elektrische Leitungen und Anschlüsse.

Für die Aufnahme besonders hoher Drehmomente auf die Trägerwelle 3 kann im Bereich des Gehäuses 12, also am hinteren Ende der Trägerwelle 3, eine hydraulische Klemmung 20 vorgesehen werden.

Für die translatorische Verstellung der Trägerwelle 3 ist ein Linearantrieb 9 in Form eines Spindelantriebs vorgesehen, mit einer feststehenden, jedoch drehbaren Gewindespindel 10, die mit einer Spindelmutter 11 korrespondiert, die wiederum über das Gehäuse 12 fest mit der Trägerwelle 3 verbunden ist. Durch einen Elektromotor 19, der mit der Gewindespindel 10 über einen Riementrieb verbunden ist, ist der Linearantrieb 9 insgesamt antreibbar.

Der relativ einfache Aufbau der in der Figur 3 dargestellten Baueinheit erlaubt, dass alle dazu gehörenden Bauteile problemlos demontierbar sind, ohne die gesamte Baueinheit auszutauschen.

### Bezugszeichenliste

- 1: Gestell
- 2: Trägerelement
- 3: Trägerwelle
- 4: Werkstückaufnahme
- 5: Spindelaufnahme
- 6: Werkzeugspindel
- 7: Werkstück
- 8: Flansch
- 9: Linearantrieb
- 10: Gewindespindel
- 11: Spindelmutter
- 12: Gehäuse
- 13: Torquemotor
- 14: Längsführung
- 15: Hydrostatisches Lager
- 16: Zuführleitung
- 17: Anschluss
- 18: Lagerkopf
- 19: Motor
- 20: Hydraulische Klemmung

## Patentansprüche

1. Werkzeugmaschine, mit einer Vielzahl feststehender, unterschiedlich positionierter Werkzeugspindeln (6) und einem Trägerelement (2), das mindestens eine Werkstückaufnahme (4) trägt, wobei das Trägerelement (2) mehrachsig translatorisch und die Werkstückaufnahme (4) mehrachsig translatorisch, insbesondere in Längsachsrichtung des Trägerelementes (2), und rotierend bewegbar ist, **dadurch gekennzeichnet, dass** das Trägerelement (2) eine diesem gegenüber axial hin und her verfahrbare und drehbare Trägerwelle (3) aufweist, die stirnseitig mindestens eine angeschlossene Werkstückaufnahme (4) trägt.

2. Werkzeugmaschine nach Anspruch 1, **dadurch gekennzeichnet, dass** die Trägerwelle (3) als Hohlwelle ausgebildet ist.

3. Werkzeugmaschine nach Anspruch 1 oder 2, **dadurch gekennzeichnet, dass** die Trägerwelle (3) axial bewegbar und rotierend in Gleitlagern gelagert ist.

4. Werkzeugmaschine nach einem der vorhergehenden Ansprüche, **dadurch gekennzeichnet, dass** die Gleitlager als hydrostatische Lager (15) ausgebildet sind.

5. Werkzeugmaschine nach einem der vorhergehenden Ansprüche, **dadurch gekennzeichnet, dass** die hydrostatischen Lager (15) in einem Lagerkopf (18) gehalten sind.

6. Werkzeugmaschine nach einem der vorhergehenden Ansprüche, **dadurch gekennzeichnet, dass** zur Rotation der Trägerwelle (3) ein Direktantrieb angeschlossen ist, vorzugsweise ein Torquemotor (13).

7. Werkzeugmaschine nach einem der vorhergehenden Ansprüche, **dadurch gekennzeichnet, dass** der Direktantrieb an dem der Werkstückaufnahme (4) gegenüberliegenden Endbereich der Trägerwelle (3) angeordnet ist.

8. Werkzeugmaschine nach einem der vorhergehenden Ansprüche, **dadurch gekennzeichnet, dass** der Direktantrieb in einem Gehäuse (12) gelagert ist, das mit einer ortsfesten Linearführung (14) korrespondiert.

9. Werkzeugmaschine nach einem der vorhergehenden Ansprüche, **dadurch gekennzeichnet, dass** die Werkstückaufnahme (4) an einem stirnseitig an der Trägerwelle (3) befestigen Flansch (8) befestigt ist.

10. Werkzeugmaschine nach einem der vorhergehenden Ansprüche, **dadurch gekennzeichnet, dass** durch die als Hohlwelle ausgebildete Trägerwelle (3) Zuführleitungen (16), insbesondere für Druckluft, Hydrauliköl und/oder Strom zum Betrieb am Flansch (8) angeschlossener Aggregate geführt sind.

11. Werkzeugmaschine nach einem der vorhergehenden Ansprüche, **dadurch gekennzeichnet, dass** zur axialen Verschiebung der Trägerwelle (3) ein Linearantrieb (9) vorgesehen ist.

12. Werkzeugmaschine nach einem der vorhergehenden Ansprüche, **dadurch gekennzeichnet, dass** der Linearantrieb (9) als Spindelantrieb ausgebildet ist.

13. Werkzeugmaschine nach einem der vorhergehenden Ansprüche, **dadurch gekennzeichnet, dass** eine Gewindespindel (10) des Spindelantriebs mit einer am Gehäuse (12) festgelegten Spindelmutter (11) korrespondiert.

14. Werkzeugmaschine nach einem der vorhergehenden Ansprüche, **dadurch gekennzeichnet, dass** in dem dem Flansch (8) gegenüberliegenden Endbereich der Trägerwelle (3) eine vorzugsweise hydraulisch betätigbare Klemmeinrichtung (20) zur Drehmomentenabstützung vorgesehen ist.

## Claims

1. Machine tool having a multiplicity of fixed, differently positioned tool spindles (6) and a carrier element (2) which carries at least one work fixture (4), the carrier element (2) ort he work fixture (4) being movable in a plurality of axes in a translational manner, in particular in the longitudinal direction of the carrier element (2) and in a rotational manner, **characterized in that** the carrier element (2) has a carrier shaft (3) which can be moved and pivoted back and forth axially with regard to the carrier element (2) and which carries at the end face at least one attached work fixture (4).

2. Machine tool according to Claim 1, **characterized in that** the carrier shaft (3) is designed as a hollow shaft.

3. Machine tool according to Claim 1 or 2, **characterized in that** the carrier shaft (3) is mounted in an axially movable and rotational manner in plain bearings.

4. Machine tool according to one of the preceding claims, **characterized in that** the plain bearings are designed as hydrostatic bearings (15).

5. Machine tool according to one of the preceding claims, **characterized in that** the hydrostatic bearings (15) are held in a bearing head (18).

6. Machine toll according to one of the preceding claims, **characterized in that** a direct drive, preferably a torque motor (13), is attached for the rotation of the carrier shaft (3).

7. Machine tool according to one of the preceding claims, **characterized in that** the direct drive is arranged on that end region of the carrier shaft (3) which is opposite the work fixture.

8. Machine tool according to one of the preceding claims, **characterized in that** the direct drive is mounted in a housing (12) which corresponds with a fixed linear guide (14).

9. Machine tool according to one of the preceding claims, **characterized in that** the work fixture (4) is fastened to a flange (8) which is fastened to the end face of the carrier shaft (3).

10. Machine tool according to one of the preceding claims, **characterized in that** feed lines (16), in particular for compressed air, hydraulic oil and/or current, for operating units attached to the flange (8) are directed through the carrier shaft (3) designed as a hollow shaft.

11. Machine tool according to one of the preceding claims, **characterized in that** a linear drive (9) is provided for the axial displacement of the carrier shaft (3).

12. Machine tool according to one of the preceding claims, **characterized in that** the linear drive (9) is designed as a spindle drive.

13. Machine tool according to one of the preceding claims, **characterized in that** a threaded spindle nut (11) secured to the housing (12).

14. Machine tool according to one of the preceding claims, **characterized in that** a preferably hydraulically actuable clamping device (20) for torque support is provided **in that** end region of the carrier shaft (3) which is opposite the flange (8).

## Revendications

1. Machine-outil, avec une pluralité de broches porte-outil (6) stationnaires et positionnées différemment et avec un élément support (2) qui porte au moins une fixation de pièce (4), l'élément support (2), étant mobile par translation sur plusieurs axes, et la fixation de pièce (4), étant mobile par translation sur plusieurs axes, en particulier dans la direction de l'axe longitudinal de l'élément porteur (2), ainsi que par rotation, **caractérisée en ce que** l'élément support (2) présente un arbre support (3) qui est rotatif et mobile axialement en va-et-vient en regard de l'élément porteur et qui porte à côté frontal au moins une fixation de pièce (4) raccordée.

2. Machine-outil selon la revendication 1, **caractérisée en ce que** l'arbre support (3) est conformé en arbre creux.

3. Machine-outil selon la revendication 1 ou 2, **caractérisée en ce que** l'arbre porteur (3) est monté de manière mobile axialement et de manière rotative dans des paliers glissants.

4. Machine-outil selon l'une des revendications précédentes, **caractérisée en ce que** les paliers glissants sont conformés en paliers hydrostatiques (15).

5. Machine-outil selon l'une des revendications précédentes, **caractérisée en ce que** les paliers hydrostatiques (15) sont montés dans une tête de paliers (18).

6. Machine-outil selon l'une des revendications précédentes, **caractérisée en ce qu'**un entrainement direct, de préférence un moteur couple (13), est raccordé pour la rotation de l'arbre support (3).

7. Machine-outil selon l'une des revendications précédentes, **caractérisée en ce que** l'entrainement direct est placé sur la partie d'extrémité de l'arbre support (3) opposée à la fixation de pièce (4).

8. Machine-outil selon l'une des revendications précédentes, **caractérisée en ce que** l'entrainement direct est monté dans un boitier (12) qui correspond avec un guidage linéaire stationnaire (14).

9. Machine-outil selon l'une des revendications précédentes, **caractérisée en ce que** la fixation de pièce (4) est fixée sur une bride (8) fixée du côté frontal sur l'arbre support (3).

10. Machine-outil selon l'une des revendications précédentes, **caractérisée en ce qu'**á travers l'arbre support (3) conformé en arbre creux passent des conduites d'alimentation (16), en particulier pour de l'air comprimé, de l'huile hydraulique et/ou de l'électricité pour le fonctionnement d'unités raccordées sur la bride (8).

11. Machine-outil selon l'une des revendications précédentes, **caractérisée en ce qu'**un entrainement linéaire (9) est prévu pour le déplacement axial de l'arbre support (3).

12. Machine-outil selon l'une des revendications précédentes, **caractérisée en ce que** l'entrainement linéaire (9) est conformé en commande á broche.

13. Machine-outil selon l'une des revendications précédentes, **caractérisée en ce qu'**une broche filetée (10) de la commande á broche correspond avec un écrou de broche (11) fixé sur le boitier (12).

14. Machine-outil selon l'une des revendications précédentes, **caractérisée en ce que** dans la partie d'extrémité de l'arbre support (3) opposée á la bride (8), il est prévu un dispositif de blocage (20) actionnable de préférence hydrauliquement pour soutenir le couple de rotation.
